# EUROPÄISCHE PATENTSCHRIFT

(11) **EP 0 260 594 B1**
(45) Veröffentlichungstag und Bekanntmachung des Hinweises auf die Patenterteilung: **09.02.1994**
(21) Anmeldenummer: 87113201.5
(22) Anmeldetag: 09.09.1987
(51) Int. Cl.: G02F 2/00, G02F 1/03, H04B 10/00

(54) **Anordnung zur Polarisationskontrolle, insbesondere für einen optischen Heterodyn- oder Homodynempfänger**
Device for controlling light polarization, in particular in a heterodyne or homodyne optical receiver
Dispositif pour contrôler la polarisation, en particulier dans un récepteur optique homodyne ou hétérodyne

(30) Priorität: 18.09.1986 DE 3631767
(43) Veröffentlichungstag der Anmeldung: 23.03.1988
(73) Patentinhaber: SIEMENS AKTIENGESELLSCHAFT, 80333 München (DE)
(72) Erfinder: Heidrich, Helmut, Dr., D-1000 Berlin 47 (DE); Hoffmann, Detlef, Dr., D-1000 Berlin 10 (DE); Nolting, Hans-Peter, Dr., D-1000 Berlin 47 (DE)

(56) Entgegenhaltungen:
- EP-A- 0 198 245
- EP-A- 0 248 234
- ELECTRONICS LETTERS, Band 21, Nr. 23, 7. November 1985, Seiten 1077-1079, Stevenage, Herts, GB; W.A. STALLARD et al.: "Novel LiNbO3 integrated-optic component for coherent optical heterodyne detection"
- TRANSACTIONS OF THE IECE OF JAPAN, Band E69, Nr. 4, April 1986, Seiten 418-419, Tokyo, JP; M. HARUNA et al.: "An efficient TE-TM mode converter using a Z-propagation LiNbO3 waveguide"
- ELECTRONICS LETTERS, Band 22, Nr. 2, 16. Januar 1986, Seiten 100-102, Stevenage, Herts, GB; L.J. RYSDALE: "Method of overcoming finite-range limitation of certain state of polarisation control devices in automatic polarisation control schemes"
- SPIE, Band 630, April/Mai 1985, Fibre Optics '86, Seiten 150-154, London, GB; R. NOE: "Endless polarisation control for heterododyne/homodyne receivers"

## Beschreibung

Die vorliegende Erfindung betrifft eine Anordnung zur Polarisationskontrolle nach dem Oberbegriff des Patentanspruchs 1.

Eine alle Merkmale des Oberbegriffs des Patentanspruchs 1 aufweisende Anordnung ist in der nicht vorveröffentlichten EP-A-0 248 234 mit älterem Zeitrang vorgeschlagen.

Aus Reinhold Noé: Endless Polarisation Control of Heterodyne/Homodyne Receivers, Fiber Optic 86, London, April/Mai 1986 ist eine Anordnung zur Polarisationskontrolle, insbesondere für einen optischen Heterodyn- oder Homodynempfänger, bekannt, die aufweist:
- einen ersten optischen Wellenleiter mit einem Eingang zum Einkoppeln von einem Teilnehmer ausgesandten, polarisierten optischen Welle,
- einen ersten Phasenmodulator, durch den im ersten Wellenleiter eine kontinuierlich veränderbare erste Doppelbrechung mit einem Brechzahlellipsoid mit einer in bestimmter Weise fest ausgerichteten Ellipsoidachse induzierbar und eine Phase der in den ersten Wellenleiter eingekoppelten und im ersten Wellenleiter geführten optischen Welle kontinuierlich einstellbar ist, und
- einen den ersten Phasenmodulator in Bezug auf die Ausbreitungsrichtung der im ersten Wellenleiter geführten optischen Welle nachgeordneten ersten Polarisationskonverter, durch den im ersten Wellenleiter eine kontinuierlich steuerbare zweite Doppelbrechung mit einem Brechzahlellipsoid mit einer im Winkel von etwa 45° zur Ellipsoidachse der ersten Doppelbrechung ausgerichteten Ellipsoidachse induzierbar und ein Polarisationszustand der im ersten Wellenleiter geführten optischen Welle an einem Ausgang des ersten Polarisationskonverters in einen beliebigen Polarisationszustand überführbar ist.

Speziell sind bei dieser bekannten Anordnung fünf doppelbrechende Elemente, drei Phasenmodulatoren und zwei Polarisationskonverter längs des ersten Wellenleiters alternierend angeordnet. Mit dieser Anordnung ist jeder eingangsseitige Polarisationszustand unbegrenzt in jeden beliebigen gewünschten Polarisationszustand überführbar. Dabei bedeutet "unbegrenzt", daß eine kontinuierliche, fortlaufende Anpassung des Polarisationszustandes an einen beliebig gewünschten oder vorgegebenen Polarisationszustand ohne eine funktionelle Polarisationsrückstellung bei Erreichen von Grenzen der Steuergröße gewährleistet ist.

Eine aus der vorveröffentlichten Druckschrift bekannte Anordnung ist auch aus der nicht vorveröffentlichten deutschen Patentanmeldung P 36 10 573.2 mit älterem Zeitrang bekannt.

Das Problem der Anpassung des Polarisationszustandes tritt bei optischen Heterodyn- oder Homodynempfängern auf. Dort muß der Polarisationszustand des dem Empfänger zugeführten optischen Signals an den Polarisationszustand des optischen Signals eines Lokaloszillators des Empfängers angepaßt sein. Während das Signal des Lokaloszillators im allgemeinen linear polarisisert ist, kann das dem Empfänger zugeführte Signal jeden beliebigen Polarisationszustand angenommen haben.

Um die Polarisationszustände beider Signale in Übereinstimmung zu bringen, kann entweder der Polarisationszustand des dem Empfänger zugeführten Signals in einer Polarisationsstabilisierung in den gleichen linearen Polarisationszustand des Signals des Lokaloszillators transformiert und zeitlich konstant gehalten werdden, oder der Polarisationszustand des Signals des Lokaloszillators wird dem ständig sich ändern könnenden Polarisationszustand des dem Empfänger zugeführten Signals nachgeführt. Diese beiden Alternativen können mit einer Anordnung nach Noé ausgeführt werden.

Bei der erstgenannten Alternative ist der Polarisationszustand am Ausgang der Anordnung fixiert, während bei der zweitgenannten Alternative der Polarisationszustand am Eingang der Anordnung fixiert ist. In derart gelagerten Fällen kann bei der Anordnung nach Noé auf einen Phasenmodulator verzichtet werden, so daß nur vier doppelbrechende Elemente benötigt werden.

Die allein angegebene Ausführungsform der Anordnung nach Noé ist eine faseroptische Realisierung, bei der die Doppelbrechungen durch Ausüben eines externen Quatschdruckes auf die den Wellenleiter bildenden Fasern erzeugt wird. Da sie nur Zwei unterschiedliche doppelbrechende Elemente benötigt, sollte sie nach Noé eine integriert optische Realisierung erleichtern.

In der nicht vorveröffentlichten europäischen Patentanmeldung EP-A-0 240 234 mit älterem Zeitrang ist eine faseroptische Ausführung einer Anordnung gemäß der deutschen Patentanmeldung P 36 10 573.2 mit nur drei doppelbrechenden Elementen, zwei Phasenmodulatoren und einem Polarisationskonverter vorgeschlagen, die so steuerbar ist, daß sich, auch wenn bei einer dieser Elemente eine Grenze seines Steuerbereichs erreicht wird, keine abrupte Änderung der Polarisation ergibt.

Eine integriert optische Anordnung, die der letztgenannten Anordnung in gewisser Weise ähnelt, ist aus Alferness R.C.: Electrooptic Guided-Wave Device for General Polarization Transformation, IEEE j. Quant. Electr. QE-17 (1981) Seiten 965-969 bekannt. Bei dieser Anordnung sind die drei vorhandenen Elemente, zwei elektrooptisch induziert doppelbrechende Phasenmodulatoren und ein Polarisationskonverter, längs eines in ein Substrat aus elektrooptischem Material integrierten optischen Wellenleiters alternierend angeordnet. Bei der angegebenen speziellen Ausführungsform dieser Anordnung besteht der optische Wellenleiter aus einem in y-Richtung verlaufenden Ti-diffundierten Lithiumniobat-Wellenleiter, der an der Oberfläche eines in x-Richtung geschnittenen Lithiumniobat-Kristalls verläuft. Jeder Phasenmodulator ist durch ein auf die Oberfläche des Kristalls aufgebrachtes, beidseitig des Wellenleiters angeordnetes Elektrodenpaar zum Anlegen einer Steuerspannung realisiert. Der Polarisationskonverter besteht aus einer Reihe von quer über dem Wellenleiter angeordneten Elektroden zum Erzeugen von räumlich periodisch wechselnden, vertikalen elektrischen Feldern im Wellenleiter.

Auch mit einer derartigen Anordnung kann ein beliebiger Polarisationszustand in einen anderen, ebenfalls beliebigen Polarisationszustand überführt werden. Sie ist zur Stabilisierung des Polarisationszustandes eines aus einer Faser empfangenen Signals, insbesondere zur Stabilisierung des aus einer Monomodefaser typischerweise erhaltenen elliptisch polarisierten Signals in ein linear polarisiertes Signal geeignet.

Allerdings ist mit einer derartigen Anordnung keine unbegrenzte, kontinuierliche Anpassung des Polarisationszustandes bei fortlaufender Polarisationsdrift möglich, d.h. beim Erreichen einer bestimmten Grenze des Steuerbereichs wird ein Rücksetzen erforderlich.

Der bei der speziellen Ausführungsform der Anordnung nach Alferness verwendete Polarisationskonverter und damit die ganze Ausführungsform selbst haben eine optische Bandbreite von etwa 2 nm (siehe dazu Booth R.C., Daymont-John B.E., Sturges P.E., Wilson M.G.: Temperature tuning of LiNbO₃ electro-optic waveguide TE/TM mode converters, Electron. Lett. 20 (1984), S. 1045-1047) und sind deswegen für den Einsatz in einem optischen Nachrichtenübertragungssystem und damit auch in einem optischen Hetero- oder Homodynempfänger ungeeignet.

Für einen derartigen Einsatz muß eine solche Anordnung so breitbandig sein, daß sie die Funktion für den gewünschten Wellenlängenbereich, beispielsweise 1300 ± 25 nm erfüllt und keine Temperaturstabilisierung oder elektrische Wellenlängenbereichskorrekturen notwendig sind.

Aus Thaniyavarn S.: Wavelength independent, optical damage immune Z-Propagation LiNbO₃ waveguide polarization converter, Appl. Phys. Lett. 47 (1985), S. 674-677 und Thaniyavarn S.: Wavelength independent, optical damage immune LiNbO₃ TE-TM mode converter, Optics Lett. 11 (1986), S. 39-41, ist ein auf einem Substrat aus elektrooptischem Material integrierter, breitbandiger elektrooptisch induziert doppelbrechender Polarisationskonverter bekannt, bei dem ein Ti-diffundierter Lithiumniobat-Wellenleiter an der Oberfläche eines in x-Richtung geschnittenen Lithiumniobatkristall in z-Richtung verläuft, und bei dem auf der Oberfläche des Kristalls drei in Längsrichtung des Wellenleiters, d.h. in z-Richtung verlaufende Elektroden aufgebracht sind. Zwei dieser Elektroden sind beidseitig des Wellenleiters angeordnet, während die dritte Elektrode dazwischen über dem Wellenleiter angeordnet ist. Durch Anlegen dreier geeigneter Potentiale an diese Elektroden kann eine elektrooptisch induzierte Anpassung der effektiven Brechungsindizes für TE- und TM-polarisierte Strahlungen erreicht werden, die eine nahezu 100%ige Konversion ermöglicht.

Aus Mariller C., Papuchon M: A Simple and Wide Optical Bandwidth TE/TM Converter Using Z Propagating LiNbO₃ Waveguides, Proc. 3rd Europ. Conf., ECIO '85 Berlin, Springer Series in Optical Sciences 48 (H.-P. Nolting, R. Ulrich Editors) S. 174-176 geht ein integriertoptischer breitbandiger Polarisationskonverter hervor, der sich von dem Konverter nach Thaniyavarn nur dadurch unterscheidet, daß er einen in y-Richtung geschnittenen Kristall einsetzt, der für die TE/TM-Konversion ein horizontales Feld quer zum Wellenleiter verlangt, und daß die dritte Elektrode über dem Wellenleiter fehlt und daher der Freiheitsgrad in Bezug auf die optisch induzierte Anpassung der effektiven Brechungsindizes fehlt.

Aufgabe der vorliegenden Erfindung ist es, eine im oben definierten Sinne unbegrenzt arbeitende, integriert optische Anordnung zur Polarisationskontrolle anzugeben, mit der sowohl der Polarisationszustand des optischen Signals des Lokaloszillators eines Heterodyn- oder Homodynempfängers als auch der Polarisationszustand eines dem Empfänger zugeführten optischen Signals so transformierbar sind, daß danach beide Signale mit einem zwar beliebigen aber gleichen Polarisationszustand überlagerbar sind.

Diese Aufgabe wird in besonders vorteilhafter Weise mit einer Anordnung der eingangs genannten Art gelöst, welche die im kennzeichnenden Teil des Patentanspruchs 1 angegebenen Merkmale aufweist.

Mit den nach Maßgabe dieses Anspruchs 1 ausgebildeten Phasenmodulatoren lassen sich elektrooptisch induzierte Ellipsoidachsen des Brechzahlellipsoids unter dem Winkel 0° zur Normalen der Kristalloberfläche erzeugen. Mit den Polarisationskonvertern nach diesem Anspruch lassen sich elektrooptisch induzierte Ellipsoidachsen des Brechzahlellipsoids unter dem Winkel von 45° zur Normalen der Kristalloberfläche erzeugen. Die derart ausgebildete Phasenmodulatoren und Polarisationskonverter entsprechen im einzelnen den Phasenmodulatoren und dem Polarisationskonverter nach Thaniyavarn. Entsprechend ist bei der Anordnung nach Anspruch 1 eine ausreichende Breitbandigkeit gegeben.

Ein weiterer Vorteil der Anordnung nach Anspruch 1 ist darin zu sehen, daß die Koppeleinrichtung oder der Richtkoppler auf dem gleichen Substrat integriert werden kann, auf dem die Phasenmodulatoren und Polarisationskonverter integriert sind. Dementsprechend ist eine zweckmäßige Ausgestaltung der Anordnung nach Anspruch 1 gemäß Anspruch 6 ausgebildet, wobei eine bevorzugte Ausführungsform dieser Anordnung aus dem Anspruch 7 hervorgeht, die im Hinblick auf die Steuerbarkeit des Koppelverhältnisses zweckmäßigerweise so ausgebildet wird, wie es im Anspruch 8 angegeben ist.

Eine auf einem Substrat aus elektrooptischem Material integrierte erfindungsgemäße Anordnung oder Weiterbildung dieser Anordnung wird bevorzugterweise nach Maßgabe des Anspruchs 9 gestaltet, wobei die Substrat- oder Kristallnormale parallel zur x-Achse ausgerichtet ist.

Eine erfindungsgemäße Anordnung oder eine Weiterbildung dieser Anordnung zeichnet sich vorteilhafterweise durch eine kurze Baulänge aus.

Bei der erfindungsgemäßen Anordnung ist das dem Empfänger zugeleitete Signal, dessen Polarisationszustand sich fortlaufend ändern kann, in den ersten Wellenleiter einzukoppeln, während das Signal des Lokaloszillators mit dem festen Polarisationszustand in den zweiten Wellenleiter einzukoppeln ist. Die beiden Signale mit dem gleichen Polarisationszustand sind den beiden Wellenleitern auf der Ausgangsseite der Anordnung, d.h. auf der vom Eingang e₁ des ersten Wellenleiters WL1 bzw. Eingang e ₂ des zweiten Wellenleiters WL2 abgekehrten Seite des ersten Polarisationskonverters PK1 bzw. des zweiten Phasenmodulators PM2 entnehmbar.

Die Wirkungsweise der erfindungsgemäßen Anordnung läßt sich wie folgt verdeutlichen:
Würde man die beiden Wellenleiter WL1 und WL2 auf der Ausgangsseite der Anordnung, d.h. auf der von ihren Eingängen e₁ bzw. e₂ abgekehrten Seite des ersten Polarisationskonverters PK1 bzw. des zweiten Phasenmodulators PM2, miteinander verbinden, so daß ein am Eingang e₁ des ersten Wellenleiters WL1 bzw. am Eingang e₂ des zweiten Wellenleiters WL2 eingekoppeltes Signal zum Eingang e₂ bzw. e₁ geführt würde, so erhielte man eine unbegrenzt arbeitende Anordnung zur Polarisationskontrolle nach Noé mit vier doppelbrechenden Elementen, die hier genügten, weil der Polarisationszustand des Lokaloszillators linear in TE oder TM ist.

Diese Anordnung kann dann nach Noé so kontrolliert werden, daß jeder beliebige Polarisationszustand am Eingang e₁ beim Durchlaufen der Anordnung in den TE- bzw. TM-Polarisationszustand transformiert wird, der am Eingang e₂ entnehmbar ist. Da die Anordnung nach Noé ein optisch reziprokes Bauelement ist, würde der am Eingang e₂ eingekoppelte TE- bzw. TM-Polarisationszustand in den genannten beliebigen Polarisationszustand transformiert, der sich fortlaufend ändern kann und am Eingang e₁ entnehmbar wäre. Ein am Eingang e₁ eingekoppeltes Signal mit einem beliebigen Polarisationszustand hat beim Durchlaufen der Hälfte der wie oben kontrollierten Anordnung nach Noé, d.h. nach Durchlaufen des ersten Phasenmodulators PM1 und des ersten Polarisationskonverters PK1 einen bestimmten Polarisationszustand P erreicht. Da die Anordnung optisch reziprok ist, muß ein am Eingang e₂ eingekoppeltes und die Anordnung in der entgegengesetzten Richtung durchlaufendes Signal mit dem TE- bzw. TM-Polarisationszustand nach dem Durchlaufen der Hälfte der wie oben kontrollierten Anordnung, d.h. nach dem Durchlaufen des zweiten Polarisationskonverters PK2 und des zweiten Phasenmodulators PM2 ebenfalls den bestimmten Polarisationszustand P erreicht haben. Dies gilt unabhängig davon, ob die beiden Wellenleiter WL1 und WL2 auf der Ausgangsseite der Anordnung miteinander verbunden sind oder nicht. Auf der Ausgangsseite der Anordnung erscheint sowohl beim ersten Wellenleiter WL1 als auch beim zweiten Wellenleiter WL2 der gleiche Polarisationszustand.

Eine vorteilhafte Weiterbildung der Erfindung ist im Anspruch 2 angegeben. Diese Weiterbildung entspricht einer Anordnung nach Noé mit fünf doppelbrechenden Elementen. Bei ihr muß der Polarisationszustand des in den zweiten Wellenleiter WL2 eingekoppelten Signals nicht TE- bzw. TM-polarisiert sein, sondern kann vielmehr beliebig sein. Mit dieser Weiterbildung können zwei optische Signale mit jeweils beliebigem Polarisationszustand so transformiert werden, daß danach beide Signale auf der Ausgangsseite der Anordnung einen beliebigen aber gleichen Polarisationszustand haben. Dazu ist die Weiterbildung so zu kontrollieren, wie die entsprechende Anordnung nach Noé mit den fünf doppelbrechenden Elementen, die so kontrolliert wird, daß der beliebige Polarisationszustand des einen Signals in den beliebigen Polarisationszustand des anderen Signals überführt wird und umgekehrt.

Wenn, wie beim Heterodyn- oder Homodynempfänger die Signale gleichen Polarisationszustandes auf der Ausgangsseite der Anordnung zu überlagern sind, ist es zweckmäßig, diese Anordnung gemäß Anspruch 3 weiterzubilden. Bevorzugterweise besteht die Koppeleinrichtung dieser Weiterbildung gemäß Anspruch 4 aus einem optischen Richtkoppler. Vorteilhaft ist es, gemäß Anspruch 5 eine Koppeleinrichtung oder einen Richtkoppler mit steuerbarem Koppelverhältnis zu verwenden, weil dann ein anwendungsbedingt optimales Koppelverhältnis eingestellt werden kann.

Die vorliegende Erfindung umfaßt auch eine integriert optische Ausführungsform einer Anordnung nach Noé mit vier oder fünf doppelbrechenden Elementen, die im Anspruch 10 angegeben ist. Diese Anordnung hat den Vorteil, daß eine ausreichende Breitbandigkeit gegeben ist und die Phasenmodulatoren und Polarisationskonverter auf einem gemeinsamen Substrat integriert sind, wodurch eine raumsparende Bauform gegeben ist. Mit den zwei oder drei Phasenmodulatoren dieser Anordnung ist jeweils eine elektrooptisch induzierte Brechzahlellipsenachse unter dem Winkel 0° zur Normalen der Kristalloberfläche erzeugbar, während mit den beiden Polarisationskonvertern dieser Anordnung jeweils eine elektrooptisch induzierte Brechzahlellipsenachse unter dem Winkel von 45° zur Kristallnormalen erzeugbar ist. Eine bevorzugte Ausgestaltung dieser Anordnung nach Anspruch 10 ist im Anspruch 11 angegeben. Auch bei dieser Anordnung ist die Substrat- und Kristallnormale parallel zur x-Achse ausgerichtet.

Die Erfindung wird in der nachfolgenden Beschreibung anhand der beigefügten Figuren beispielhaft näher erläutert. Von den Figuren zeigen:
- Figur 1: eine Anordnung mit zwei optischen Wellenleitern, zwei Phasenmodulatoren, zwei Polarisationskonvertern und einem polarisationsunabhängigen Richtkoppler mit einem Blockschaltbild einer elektronischen Einrichtung zur Kontrolle der Anordnung, die für einen Heterodyn- oder Homodynempfänger verwendbar ist;
- Figur 2: die integriert optische Ausführunsform der Anordnung nach Figur 1;
- Figur 3: eine Weiterbildung der integriert optischen Anordnung nach Figur 2 mit einem dritten Phasenmodulator;
- Figur 4: eine integriert optische Ausführungsform einer Anordnung nach Noé mit zwei Phasenmodulatoren und zwei Polarisationskonvertern; und
- Figur 5: eine der Ausführunsform nach Figur 4 entsprechende integriert optische Ausführungsform einer Anordnung nach Noé mit drei Phasenmodulatoren und zwei Polarisationskonvertern.

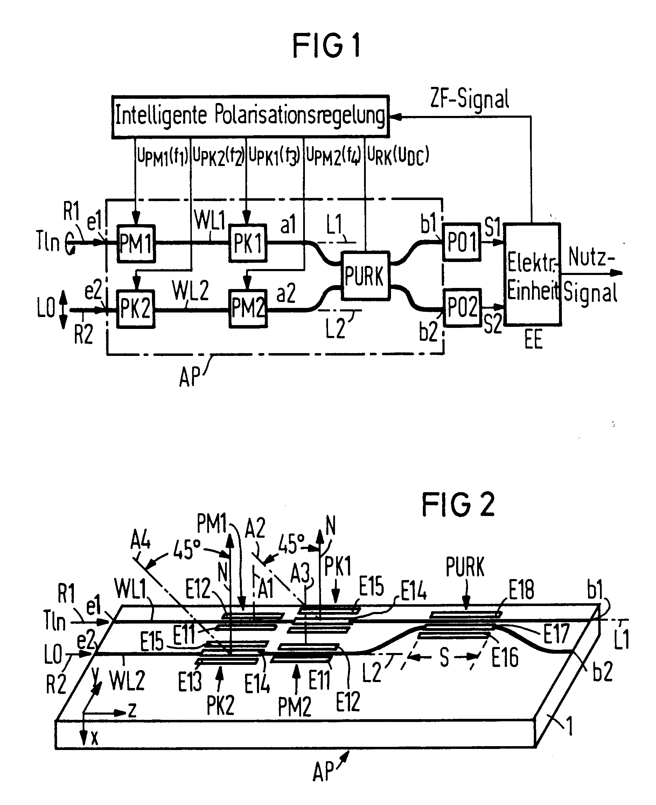

Bei der für einen Heterodyn- oder Homodynempfänger geeigneten Anordnung AP nach Figur 1 wird die dem nicht dargestellten Empfänger zuzuführende und von einem Teilnehmer ausgesandte optische Welle Tln in den ersten Wellenleiter WL1 der Anordnung AP über dessen Eingang e₁ eingekoppelt. Diese optische Welle Tln wird im allgemeinen Fall durch eine Standard-Monomodefaser zugeführt und ist dann üblicherweise elliptisch polarisiert. Durch einen ersten Phasenmodulator PM1 kann in dem ersten Wellenleiter WL1 eine kontinuierlich veränderbare Doppelbrechung induziert werden, wodurch eine Phase des in dem ersten Wellenleiter WL1 geführten optischen Welle Tln kontinuierlich veränderbar ist. Dem ersten Phasenmodulator PM1 ist in Bezug auf die Ausbreitungsrichtung R1 der in dem ersten Weltenleiter WL1 geführten optischen Welle Tln ein Polarisationskonverter PK1 nachgeordnet, durch den in dem ersten Wellenleiter WL 1 eine kontinuierlich veränderbare Doppelbrechung induzierbar ist und durch den ein zu einem Polarisationszustand der in dem ersten Wellenleiter WL1 geführten optischen Welle Tln orthogonaler Polarisationszustand erzeugbar ist.

Die Ellipsoidachse des Brechzahlellipsoids der durch den ersten Phasenmodulator PM1 induzierten Doppelbrechung ist in bestimmter Weise senkrecht zu der in der Ausbreitungsrichtung R1 verlaufenden Längsachse L1 des ersten Wellenleiters WL1 ausgerichtet. Die ebenfalls senkrecht zur Längsachse L1 des ersten Wellenleiters WL1 ausgerichtete Ellipsoidachse des Brechzahlellipsoids der durch den ersten Polarisationskonverter PK1 induzierten Doppelbrechung ist gegenüber der Ellipsoidachse des ersten Phasenmodulators PM1 um 45° um die Längsachse L1 des ersten Wellenleiters WL1 verdreht.

Die linear TE- oder TM-polarisiserte und damit einen festen Polarisationszustand aufweisende optische Welle LO eines nicht dargestellten Lokaloszillators des Empfängers wird in einem zu dem ersten Wellenleiter WL1 parallelen zweiten Wellenleiter WL2 über dessen Eingang E₂ eingekoppelt.

Durch einen zweiten Polarisationskonverter PK2 ist in dem zweiten Wellenleiter WL2 eine kontinuierlich veränderbare Doppelbrechung induzierbar und ein zu dem festen Polarisationszustand der eingekoppelten optischen Welle LO des Lokaloszillators orthogonaler Polarisationszustand erzeugbar.

Dem zweiten Polarisationskonverter PK2 ist in Bezug auf die Ausbreitungsrichtung R2 des in dem zweiten Wellenleiter WL2 geführten optischen Welle LO ein zweiter Phasenmodulator PM2 nachgeordnet, durch den im zweiten Wellenleiter WL2 eine kontinuierlich veränderbare Doppelbrechung induzierbar und dadurch eine Phase des in dem zweiten Wellenleiter WL2 geführten Lokaloszillatorsignals LO kontinuierlich veränderbar ist.

Die Ellipsoidachse des Brechzahlellipsoids der von dem zweiten Phasenmodulator PM2 induzierten Doppelbrechung ist so ausgerichtet, daß sie parallel zur Ellipsoidachse des Brechzahlellipsoids des ersten Phasenmodulators PM1 verläuft. Die Ellipsoidachse des Brechzahlellipsoids der vom zweiten Polarisationskonverter PK2 induzierten Doppelbrechung ist gegenüber der Ellipsoid achse des zweiten Phasenmodulators PM2 um einen Winkel von 45° um die in der Ausbreitungsrichtung R2 verlaufende Längsachse L2 des zweiten Wellenleiters WL2 verdreht, beispielsweise so, daß sie parallel zur Ellipsoidachse des ersten Polarisationskonverters PK1 verläuft.

Die Eingänge e₁ und e₂ der beiden Wellenleiter WL1 und WL2 können reale Eingänge, beispielsweise Stirnflächen der Wellenleiter WL1 und WL2 sein, durch welche die Signale eingekoppelt werden. Sie müssen aber keine realen Eingänge sein, sondern können auch nur eine Grenze der Anordnung AP definieren. Beispielsweise könnte in einer faseroptischen Ausführung der Anordnung AP eine das Teilnehmersignal zuführende Faser sich bis zum ausgangsseitigen Ende der Anordnung AP durchgehend erstrecken, so daß der erste Wellenleiter WL1 nur ein von der Stelle e₁ bis zu diesem ausgangsseitigen Ende sich erstreckender Abschnitt dieser Faser wäre.

Auf der Ausgangsseite der Anordnung AP, d.h. auf der vom Eingang e₁ des ersten Wellenleiters WL1 und vom Eingang e₂ des zweiten Wellenleiters WL2 abgekehrten Seite des ersten Polarisationskonverters PK1 bzw. des zweiten Phasenmodulators PM2 ist ein polarisationsunabhängiger Richtkoppler PURK angeordnet, dessen Koppelverhältnis steuerbar ist, so daß er den anwendungsbedingten Verhältnissen optimal angepaßt werden kann, beispielsweise bequem zu einem exakten 3dB-Koppler gemacht werden kann.

Die aus dem ersten Polarisationskonverter PK1 austretende optische Welle Tln wird einem Eingang a₁ dieses Richtkopplers PURK zugeführt, während die aus dem zweiten Phasenmodulator PM2 austretende optische Welle LO, die bei geeigneter Regelung der Anordnung AP den gleichen Polarisationszustand hat, wie die dem Eingang a₁ zugeführte optische Welle Tln, einem anderen Eingang a₂ des Richtkopplers zugeführt wird. Im Richtkoppler PURK selbst werden diese beiden Signale überlagert.

Die an einem Ausgang b₁ oder an einem anderen Ausgang b₂ des Richtkopplers PURK verfügbare optische Ausgangswelle dieses Kopplers wird einem Fotodetektor PO1 bzw. PO2 zugeleitet. Wahlweise kann an jedem der Ausgänge b₁ und b₂ des Richtkopplers PURK ein Fotodetektor PO1 und PO2 vorgesehen sein, die dann im Gegentakt betrieben werden.

Das elektrische Ausgangssignal S1 oder/und S2 des Fotodetektors PD1 oder/und PD2 wird einer elektrischen Einheit EE zugeführt, in der aus dem oder den zugeführten Signalen das Nutzsignal und ein ZF-Signal gewonnen werden. Das ZF-Signal wird einer intelligenten Polarisationsregelungseinheit IP zugeführt, die aus Wobbelfrequenzen f₁, f₂, f₃ und f₄, die der Reihe nach dem Phasenmodulator PM1, dem zweiten Polarisationskonverter PK2, dem ersten Polarisationskonverter PK1 bzw. dem zweiten Phasenmodulator PM2 zugeordnet sind, Regelspannungen U_{PM1}(f₁), U_{PK2}(f₂), U_{PK1}(f₃) bzw. U_{PM2}(f₄) erzeugt, die in der gleichen Reihenfolge dem ersten Phasenmodulator PM1, dem zweiten Polarisationskonverter PK2, dem ersten Polarisationskonverter PK1 bzw. dem zweiten Phasenmodulator PM2 zugeordnet sind und diese Elemente jeweils steuern. Außerdem erzeugt die Polarisationsregelungseinheit IP ein von einer Gleichspannung U_{DC} abhängiges Spannungssignal U_{RK}(U_{DC}) mit dem das Koppelverhältnis des Richtkopplers PURK eingestellt oder geregelt wird. In der Polarisationsregelungseinheit IP wird anhand der Regelgrößen der einzelnen doppelbrechenden Elemente PM1, PK2, PK1 bzw. PM2 darstellenden Wobbelfrequenzen f₁, f₂, f₃ bzw. f₄ und der Amplitude des zugeführten ZF-Signals der Polarisationszustand für den Einschwingfall und den Betriebsfall der Anordnung AP ermittelt. Der Regelablauf kann je nach Polarisationszyklus und nach einer Entscheidungstabelle von einer abgespeicherten Logik abgerufen werden.

Bei der in der Figur 2 dargestellten integriert optischen Ausführungsform der Anordnung AP nach Figur 1 bestehen die beiden Wellenleiter WL1 und WL2 aus Streifenwellenleitern, die in der Oberfläche eines Substrats 1 in Form eines in x-Richtung geschnittenen Lithiumniobatkristalls integriert sind, wobei die beiden Wellenleiter WL1 und WL2 so angeordnet sind, daß ihre Längsachsen L₁ und L₂ parallel zur optischen Kristallachse dieses doppelbrechenden Kristalls und damit zur z-Achse sind.

Jeder der beiden Phasenmodulatoren PM1 und PM2 besteht aus zwei streifenförmigen Elektroden E11 und E12, die zu beiden Seiten des zugeordneten Wellenleiters WL1 bzw. WL2 angeordnet sind und in längsaxialer Richtung dieses Wellenleiters verlaufen.

Die beiden Elektroden E11 und E12 eines jeden Phasenmodulators PM1 und PM2 dienen zum Anlegen von Steuerspannungen, durch die im zugeordneten Wellenleiter WL1 bzw. WL2 eine elektrooptisch induzierte Doppelbrechung mit einer Ellipsoidachse A₁ bzw. A₃ induzierbar ist, die beispielsweise parallel zur x-Achse und damit auch parallel zur Normalen N der Oberfläche des Substrats 1 verläuft.

Jeder Polarisationskonverter PK1 und PK2 besteht aus drei streifenförmigen Elektroden E13, E14 und E15, die in längsaxialer Richtung zum zugeordneten Wellenleiter WL1 bzw. WL2 verlaufen und von denen zwei Elektroden E13 und E15 zu beiden Seiten des zugeordneten Wellenleiters angeordnet sind, während die dritte Elektrode E14 zwischen diesen beiden Elektroden über dem zugeordneten Wellenleiter WL1 bzw. WL2 angeordnet ist.

Die drei Elektroden E13, E14 und E15 jedes Polarisationskonverters PK1 und PK2 dienen zum Anlegen von Steuerspannungen, durch die im zugeordneten Wellenleiter WL1 bzw. WL2 elektroopisch eine Doppelbrechung mit einer Brechzahlellipsenachse A₂ bzw. A₄ induzierbar ist, die mit der Normalen N einen Winkel von 45° einschließt und in einer zur Längsachse L1 bzw. L2 des zugeordneten Wellenleiters WL2 bzw. WL2 senkrechten Ebene liegt.

Ein Polarisationskonverter PK1 bzw. PK2 wie er soeben beschrieben worden ist, ist in den obengenannten Veröffentlichungen von Thaniyavarn beschrieben. Daraus geht auch der funktionelle Zusammenhang zwischen den anzulegenden Steuerspannugen und der Polarisationskonversion hervor, die bei einem solchen Konverter nahezu 100 % beträgt.

Ein Phasenmodulator, wie er in der Ausführungsform nach Figur 2 verwendet ist, geht aus der obengenannten Veröffentlichung von Alferness hervor.

Der polarisationsunabhängige optische Richtkoppler PURK ist dadurch realisiert, daß die beiden Wellenleiter WL1 und WL2 auf der Ausgangsseite der Anordnung AP so zusammengeführt werden, daß sie innerhalb einer Strecke S in einem so geringen Abstand parallel nebeneinander verlaufen, daß innerhalb dieser Strecke S eine Strahlungsüberkopplung zwischen den beiden Wellenleitern ermöglicht ist. Zur Steuerung des Koppelverhältnisses sind innerhalb der Strecke 1 drei streifenförmigen Elektroden E16, E17 und E18 vorgesehen, die parallel zu den beiden Wellenleitern WL1 und WL2 verlaufen und von denen zwei Elektroden E16 und E18 zu beiden Seiten der beiden Wellenleiter angeordnet sind, während die dritte Elektrode E17 zwischen diesen beiden Elektroden über dem Zwischenraum zwischen den beiden eng benachbarten Wellenleitern WL1 und WL2 angeordnet ist. Die beiden Ausgänge b₁, b₂ des Richtkopplers PURK sind durch die Stirnflächen der beiden Wellenleiter WL1 und WL2 am ausgangsseitigen Ende des Substrats 1 gegeben. Die Eingänge des Richtkopplers sind keine realen Eingänge und sind der Einfachheit halber nicht dargestellt.

Die beiden Eingänge e₁ und e₂ der beiden Wellenleiter WL1 und WL2 sind ebenfalls durch Stirnflächen dieser Wellenleiter am eingangsseitigen Ende des Substrats 1 gebildet.

Bei einer konkreten Realisierung der Anordnung nach Figur 2 betrug bei den Phasenmodulatoren die differentielle Halbwellenspannung bei einer Elektrodenlänge von 5 mm und einer optischen Wellenlänge von 1,3 µm etwa 40 Volt, d.h. es wurde eine relative Phasenverschiebung von 0,9°/Vmm zwischen der TE- und der TM-Welle erreicht. Der Polarisationskonverter, der ein TE/TM-Konverter ist, hat bei einer Baulänge von 8,5 mm eine Konversionsspannung, die um 30 Volt herum liegt. Die Baulänge der Anordnung mit nur den beiden Phasenmodulatoren PM1 und PM2 und den beiden Polarisationskonvertern PK1 und PK2, also ohne den Richtkoppler PURK, beträgt bei den angegebenen Maßen etwa 30 mm. Die Länge der gesamten Anordnung nach Figur 2 beträgt dann bei einer Richtkopplerlänge von 10 mm und Krümmungsradien der Wellenleiter von 30 mm etwa 40 mm.

Vorteile einer integriert optischen Anordnung nach den Figuren 2, 3, 4 sind in der hohen Ausbeute bei der Herstellung, in der Verschleißfreiheit, in kurzen Regelzeiten und in einer quasi leistungsfreien Regelung zu sehen. Außerdem ist auch eine monolithische Integration auf anderen elektrooptischen Materialien wie beispielsweise InP möglich und das Koppelverhältnis der Koppeleinrichtung ist regelbar.

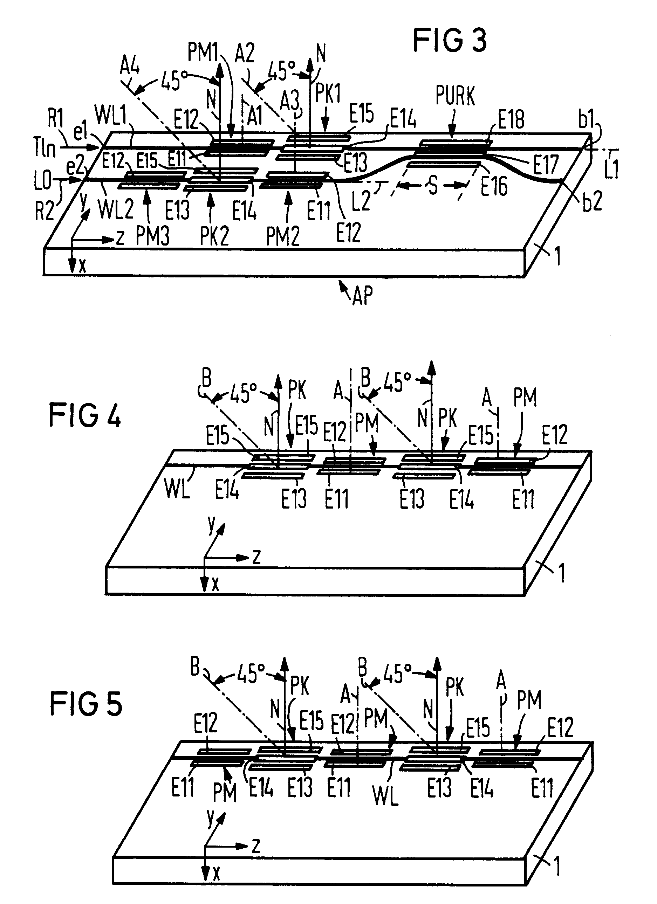

Die in Figur 3 dargestellte integriert optische Anordnung unterscheidet sich von der Anordnung nach Figur 2 lediglich darin, daß zwischen dem Eingang e₂ des zweiten Wellenleiters WL2 und dem zweiten Polarisationskonverter PK2 ein dritter Phasenmodulator PM3 angeordnet ist, der ebenso wie die anderen Phasenmodulatoren PM1 und PM2 aus den beiden Elektroden E11 und E12 gebildet ist.

Bei der integriert optischen Anordnung nach Figur 4 ist in die Oberfläche des Substrats 1 aus dem in x-Richtung geschnittenen Lithiumniobatkristall ein einziger streifenförmiger Wellenleiter WL integriert, der in z-Richtung und damit in Richtung der optischen Kristallachse verläuft. Längs dieses Wellenleiters WL sind alternierend zwei Phasenkonverter PK und zwei Phasenmodulatoren PM angeordnet. Der Aufbau jedes Phasenkonverters PK und jedes Phasenmodulators PM entspricht dem der Phasenkonverter PK1 und PK2 bzw. der Phasenmodulatoren PM1 und PM2 der Anordnung nach Figur 2 oder 3. Die Ellipsoidachse B des Brechzahlellipsoids jedes Phasenkonverters PK ist beispielsweise so ausgerichtet, wie die Ellipsoidachse A2 oder A4 eines Phasenkonverters PK1 bzw. PK2 bei der Ausführungsform nach Figur 2 oder 3. Die Ellipsoidachse des Brechzahlellipsoids jedes Phasenmodulators PM ist z. B in gleicher Weise wie die Ellipsoidachse A1 oder A2 eines Phasenmodulators PM1 oder PM2 der Ausführungsform nach Figur 2 oder 3 ausgerichtet.

Die Anordnung nach Figur 4 entspricht einer elektrooptisch steuerbaren Anordnung nach Noé mit vier doppelbrechenden Elementen.

Die integriert optische Anordnung nach Figur 5 unterscheidet sich von der Anordnung nach Figur 4 nur durch den weiteren Phasenmodulator PM, der wie die übrigen Phasenmodulatoren PM aufgebaut ist. Diese Anordnung entspricht einer elektrooptisch steuerbaren Anordnung nach Noé mit fünf doppelbrechenden Elementen.

Vorteile einer Anordnung nach Figur 4 oder 5 sind in der Verschleißfreiheit, in kurzen Regelzeiten und einer praktisch leistungsfreien Regelung zu sehen. Außerdem ist eine Integration auf anderen elektrooptischen Materialien, insbesondere auf InP möglich.

Bei einer konkreten Ausführungsform einer Anordnung nach Figur 4 besteht der Wellenleiter WL aus einem Ti-dotierten Streifenwellenleiter, der durch Eindiffundieren von Ti-Streifen mit beispielsweise einer Ti-Streifendicke von 75 nm in ein Substrat 1 bei 1040°C und einer Diffusionszeit von 6 Stunden und 25 Minuten hergestellt worden ist. Die Breite des Streifenwellenleiters WL betrug danach 8 µm. Die beiden Elektroden jedes Phasenmodulators PM bestehen aus zwei Streifen aus Gold von 200 nm Dicke und 5 mm Länge, die seitlich an den Streifenwellenleiter WL grenzen. Die drei Elektroden jedes Polarisationskonverters PK bestehen ebenfalls aus Goldstreifen von 200 nm Dicke und 8,5 mm Länge. Von den zu beiden Seiten des Streifenwellenleiters WL angeordneten Elektroden E13 und E15 hat eine eine Breite von 50 µm und die andere eine Breite von 100 µm. Die über dem Streifenwellenleiter WL angeordnete dritte Elektrode E14 hat eine Breite von 8 µm. getrennt. Der Abstand der Elektroden E13 und E15 von der Elektrode E14 beträgt jeweils 5 µm. Die Anordnungen nach den Figuren 2 und 3 können entsprechend hergestellt werden.

## Patentansprüche

1. Anordnung zur Polarisationskontrolle, insbesondere für einen optischen Heterodyn- oder Homodynempfänger, mit
- einem ersten optischen Wellenleiter (WL1) mit einem Eingang (e₁) zum Einkoppeln einer von einem Teilnehmer ausgesandten, polarisierten optischen Welle (Tln),
- einem ersten Phasenmodulator (PM1), durch den im ersten Wellenleiter (WL1) eine kontinuierlich veränderbare erste Doppelbrechung mit einem Brechzahlellipsoid mit einer in bestimmter Weise fest ausgerichteten Ellipsoidachse (A₁) induzierbar und eine Phase der in den ersten Wellenleiter (WL1) eingekoppelten und im ersten Wellenleiter (WL1) geführten optischen Welle (Tln) kontinuierlich einstellbar ist,
- einem dem ersten Phasenmodulator (PM1) in Bezug auf die Ausbreitungsrichtung (R1) der im ersten Wellenleiter (WL1) geführten optischen Welle (Tln) nachgeordneten ersten Polarisationskonverter (PK1), durch den im ersten Wellenleiter (WL1) eine kontinuierlich steuerbare zweite Doppelbrechung mit einem Brechzahlellipsoid mit einer im Winkel von etwa 45° zur Ellipsoidachse (A₁) der ersten Doppelbrechung ausgerichteten Ellipsoidachse (A₂)induzierbar und ein Polarisationszustand der im ersten Wellenleiter (WL1) geführten optischen Welle (Tln) an einem Ausgang des ersten Polarisationskonverters (PK1) in einen beliebigen Polarisationszustand überführbar ist,
- einem zweiten optischen Wellenleiter (WL2) mit einem Eingang (e₂) zum Einkoppeln einer polarisierten, von einem Lokaloszillator ausgesandten optischen Welle (LO) mit einem individuellen Polarisationszustand,
- einem zweiten Polarisationskonverter (PK2), durch den in dem zweiten Wellenleiter (WL2) eine kontinuierlich veränderbare dritte Doppelbrechung mit einem Brechzahlellipsoid mit einer im Winkel von etwa 45° zur Ellipsoidachse (A₁) der ersten Doppelbrechung ausgerichteten Ellipsoidachse (A₄) induzierbar und ein zu dem individuellen Polarisationszustand der in den zweiten Wellenleiter (WL2) eingekoppelten und im zweiten Wellenleiter (WL2) geführten optischen Welle (LO) orthogonaler Polarisationszustand erzeugbar ist, und
- einem dem zweiten Polarisationskonverter (PK2) in Bezug auf die Ausbreitungsrichtung (R2) der im zweiten Wellenleiter (WL2) geführten optischen Welle (LO) nachgeordneten zweiten Phasenmodulator (PM2), durch den im zweiten Wellenleiter (WL2) eine kontinuierlich veränderbare vierte Doppelbrechung mit einem Brechzahlellipsoid mit einer zur Ellipsoidachse (A₁) der ersten Doppelbrechung ausgerichteten Ellipsoidachse (A₃) induzierbar und der Polarisationszustand der im zweiten Wellenleiter (WL2) geführten optischen Welle (LO) in einen beliebigen Polarisationszustand an einem Ausgang des zweiten Phasenmodulators (PM2) transformierbar ist,
**dadurch gekennzeichnet,**
- daß der erste und zweite optische Wellenleiter (WL1, WL2) auf einem Substrat (1) aus elektrooptischem Material integriert sind,
- daß jeder Phasenmodulator (PM1; PM2, PM3) ein Paar von auf dem Substrat (1) zu beiden Seiten des dem jeweiligen Phasenmodulator (PM1, PM2) zugeordneten Wellenleiters (WL1; WL2) angeordneten Elektroden (E11, E12) zum Anlegen von Steuerspannungen zum Induzieren der ersten bzw. zweiten Doppelbrechung aufweist, und
- daß jeder Polarisationskonverter (PK1; PK2) zwei auf dem Substrat (1) zu beiden Seiten des dem jeweiligen Polarisationskonverter (PK1, (PK2) zugeordneten Wellenleiters (WL1; WL2) angeordnete Elektroden (E13, E15) und eine zwischen diesen beiden Elektroden (E13, E15) über diesem Wellenleiter (WL1; WL2) auf dem Substrat (1) angeordnete dritte Elektrode (E14) zum Anlegen von Steuerspannungen zum Induzieren der dritten bzw. vierten Doppelbrechung und Einstellen der Ellipsoidachse (A₂, A₃) dieser dritten bzw. vierten Doppelbrechung auf einen Winkel von etwa 45° zur Ellipsoidachse (A₁) der ersten Doppelbrechung aufweist.

2. Anordnung nach Anspruch 1, **dadurch gekennzeichnet,** daß zwischen dem Eingang (e₂) des zweiten Wellenleiters (WL2) und dem zweiten Polarisationskonverter (PK2) ein dritter Phasenmodulator (PM3) angeordnet ist, durch den im zweiten Wellenleiter (WL2) eine kontinuierlich veränderbare fünfte Doppelbrechung mit einem Brechzahlellipsoid mit einer parallel zur Ellipsoidachse (A₁) der ersten Doppelbrechung ausgerichteten Ellipsoidachse (A₅) induzierbar und jeder beliebige Polarisationszustand der in den zweiten Wellenleiter (WL2) eingekoppelten optischen Welle (LO) in den individuellen Polarisationszustand transformierbar ist, der an einem Eingang des zweiten Polarisationskonverters (PK2) notwendig ist.

3. Anordnung nach Anspruch 1 oder 2, **dadurch gekennzeichnet,** daß eine sowohl dem ersten Polarisationskonverter (PK1) in Bezug auf die Ausbreitungsrichtung (R1) der im ersten Wellenleiter (WL) geführten polarisierten optischen Welle (Tln) als auch dem zweiten Phasenmodulator (PM2) in Bezug auf die Ausbreitungsrichtung (R2) der im zweiten Wellenleiter (WL2) geführten optischen Welle (LO) nachgeordnete polarisationsunabhängige optische Koppeleinrichtung (PURK) vorgesehen ist, der diese beiden optischen Wellen (Tln, TO) zur Überlagerung zugeleitet sind.

4. Anordnung nach Anspruch 3, **dadurch gekennzeichnet,** daß die Koppeleinrichtung (PURK) aus einem optischen Richtkoppler besteht.

5. Anordnung nach Anspruch 3 oder 4, **dadurch gekennzeichnet,** daß die Koppeleinrichtung oder der Richtkoppler (PURK) aus einer Koppeleinrichtung oder einem Richtkoppler mit steuerbarem Koppelverhältnis besteht.

6. Anordnung nach Anspruch 5 und einem der Ansprüche 3 bis 4, **dadurch gekennzeichnet,** daß die Koppeleinrichtung oder der Richtkoppler (PURK) auf dem Substrat (1) integriert sind.

7. Anordnung nach Anspruch 4 und 6, **dadurch gekennzeichnet,** daß die beiden auf dem Substrat (1) integrierten optischen Wellenleiter (WL1, WL2) auf der von ihren Eingängen (e₁, e₂) abgekehrten Seite des ersten Polarisationskonverters (PK1) und des zweiten Phasenmodulators (PM2) - der Ausgangsseite der Anordnung - eine bestimmte Strecke (S) lang in einem so geringen Abstand nebeneinander geführt sind, daß die beiden Wellenleiter (WL1, WL2) innerhalb dieser Strecke einen optischen Richtkoppler (PURK) bilden.

8. Anordnung nach Anspruch 5 und 7, **dadurch gekennzeichnet,** daß innerhalb der bestimmten Strecke (S) wenigstens drei Elektroden (E16, E17, E18) zum Anlegen von Steuerspannungen auf dem Substrat (1) angeordnet sind, von denen zwei Elektroden (E16, E18) zu beiden Seiten der beiden im geringen Abstand nebeneinander geführten Wellenleiter (WL1, WL2) und die dritte Elektrode (E17) zwischen diesen beiden Elektroden (E16, E18) über den Zwischenraum zwischen diesen beiden Wellenleitern (WL1, WL2) angeordnet sind.

9. Anordnung nach einem der Ansprüche 1 bis 8, **dadurch gekennzeichnet,** daß das Substrat (1) aus einem in einer bestimmten Richtung senkrecht zu seiner optischen Kristallachse geschnittenen Lithiumniobatkristall besteht, auf dem die beiden Wellenleiter (WL1, WL2) so integriert sind, daß ihre Längsrichtung im Bereich der Phasenkonverter (PK1, PK2) und der Phasenmodulatoren (PM1; PM2, PM3) und damit auch die Ausbreitungsrichtungen (R1, R2) der in diese Wellenleiter (WL1, WL2) eingekoppelten optischen Wellen (Tln, LO) in diesem Bereich in Richtung der optischen Kristallachse (z-Achse) dieses doppelbrechenden Kristalls verlaufen.

10. Anordnung zur Polarisationskontrolle, insbesondere für einen optischen Heterodyn- oder Homodynempfänger, mit
- einem optischen Wellenleiter (WL), in den eine von einem Teilnehmer empfangene, polarisierte optische Welle (Tln) einkoppelbar ist, und mit
- einer Anordnung aus zwei oder drei Phasenmodulatoren (PM) und zwei Polarisationskonvertern (PK), die längs des Wellenleiters (WL) alternierend angeordnet sind, wobei
- durch jeden Phasenmodulator (PM) in dem Wellenleiter (WL) eine kontinuierlich veränderbare erste Doppelbrechung mit einem Brechzahlellipsoid mit einer in einer bestimmten Weise fest ausgerichteten Ellipsoidachse (A) induzierbar ist, wodurch eine Phase der von dem Teilnehmer empfangenen, in den Wellenleiter (WL1) eingekoppelten und im Wellenleiter (WL) geführten optischen Welle (Tln) kontinuierlich einstellbar ist, und wobei
- durch jeden Polarisationskonverter (PK) in dem Wellenleiter (WL) eine kontinuierlich veränderbare zweite Doppelbrechung mit einem Brechzahlellipsoid mit einer im Winkel von 45° zur Ellipsoidachse (A) der ersten Doppelbrechung der Phasenmodulatoren (PM) ausgerichteten Ellipsoidachse (B) induzierbar und ein zu einem Polarisationszustand der von dem Teilnehmer empfangenen und in den Wellenleiter (WL) eingekoppelten optischen Welle (Tln) orthogonaler Polarisationszustand erzeugbar ist,
**dadurch gekennzeichnet,** daß der Wellenleiter (WL) auf einem Substrat (1) aus einem elektrooptischen Material integriert ist, daß jeder Phasenmodulator (PM) zwei auf dem Substrat (1) zu beiden Seiten des Wellenleiters (WL) angeordneten Elektroden (E11, E12) zum Anlegen von Steuerspannungen zum Induzieren der jeweiligen ersten Doppelbrechung aufweist, und daß jeder Polarisationskonverter (PK) zwei auf dem Substrat (1) zu beiden Seiten des Wellenleiters (WL1) angeordnete Elektroden (E13, E15) und eine zwischen diesen beiden Elektroden (E13, E15) über dem Wellenleiter (WL) auf dem Substrat angeordnete dritte Elektrode (E14) zum Anlegen von Steuerspannungen zum Induzieren der jeweiligen zweiten Doppelbrechung und Einstellen der Ellipsoidachse dieser zweiten Doppelbrechung auf einen Winkel von etwa 45° zur Ellipsoidachse (A) der ersten Doppelbrechung aufweist.

11. Anordnung nach Anspruch 10, **dadurch gekennzeichnet,** daß das Substrat (1) aus einem in einer bestimmten Richtung senkrecht zur optischen Kristallachse geschnittenen Lithiumniobatkristall besteht.

## Claims

1. Arrangement for controlling polarization, particularly for an optical heterodyne or homodyne receiver, comprising
- a first optical waveguide (WL1) with an input (e₁) for inserting a polarized optical wave (Tln) transmitted by a subscriber,
- a first phase modulator (PM1) by means of which a continuously variable first birefringence with a refractive-index ellipsoid with an ellipsoid axis (A₁) with fixed alignment in a particular manner can be induced in the first waveguide (WL1) and a phase of the optical wave (Tln) inserted into the first waveguide (WL1) and guided in the first waveguide (WL1) can be continuously adjusted,
- a first polarization converter (PK1) downstream of the first phase modulator (PM1) with respect to the direction of propagation (R1) of the optical wave (Tln) guided in the first waveguide (WL1), by means of which converter a continuously controllable second birefringence with a refractive-index ellipsoid with an ellipsoid axis (A₂) aligned at an angle of about 45° with respect to the ellipsoid axis (A₁) of the first birefringence can be induced in the first waveguide (WL1) and a state of polarization of the optical wave (Tln) guided in the first waveguide (WL1) can be changed into any arbitrary state of polarization at an output of the first polarization converter (PK1),
- a second optical waveguide (WL2) with an input (e₂) for inserting a polarized optical wave (LO) transmitted by a local oscillator and having an individual state of polarization,
- a second polarization converter (PK2) by means of which a continuously variable third birefringence with a refractive-index ellipsoid with an ellipsoid axis (A₄) aligned at an angle of about 45° with respect to the ellipsoid axis (A₁) of the first birefringence can be induced in the second waveguide (WL2) and a state of polarization which is orthogonal to the individual state of polarization of the optical wave (LO) inserted into the second waveguide (WL2) and guided in the second waveguide (WL2) can be generated, and
- a second phase modulator (PM2) downstream of the second polarization converter (PK2) with respect to the direction of propagation (R2) of the optical wave (LO) guided in the second waveguide (WL2), by means of which a continuously variable fourth birefringence with the refractive-index ellipsoid having an ellipsoid axis (A₃) aligned with respect to the ellipsoid axis (A₁) of the first birefringence can be induced in the second waveguide (WL2) and the state of polarization of the optical wave (LO) guided in the second waveguide (WL2) can be transformed into any arbitrary state of polarization at an output of the second phase modulator (PM2),
characterized
- in that the first and second optical waveguides (WL1, WL2) are integrated on a substrate (1) of electrooptical material,
- in that each phase modulator (PM1; PM2, PM3) exhibits a pair of electrodes (E11, E12) arranged on the substrate (1) on both sides of the waveguide (WL1; WL2) allocated to the respective phase modulator (PM1, PM2) for applying control voltages for inducing the first and, respectively, second birefringence, and
- in that each polarization converter (PK1; PK2) exhibits two electrodes (E13, E15) arranged on the substrate (1) on both sides of the waveguide (WL1; WL2) allocated to the respective polarization converter (PK1, PK2) and a third electrode (E14), arranged on the substrate (1) above this waveguide (WL1; WL2) between these two electrodes (E13, E15) for applying control voltages for inducing the third and, respectively, fourth birefringence and setting the ellipsoid axis (A₂, A₃) of this third and, respectively, fourth birefringence to an angle of about 45° with respect to the ellipsoid axis (A₁) of the first birefringence.

2. Arrangement according to Claim 1, characterized in that between the input (e₂) of the second waveguide (WL2) and the second polarization converter (PK2), a third phase modulator (PM3) is arranged by means of which a continuously variable fifth birefringence with a refractive-index ellipsoid with an ellipsoid axis (A₅) aligned in parallel with the ellipsoid axis (A₁) of the first birefringence can be induced in the second waveguide (WL2) and any arbitrary state of polarization of the optical wave (LO) inserted into the second waveguide (WL2) can be transformed into the individual state of polarization which is necessary at an input of the second polarization converter (PK2).

3. Arrangement according to Claim 1 or 2, characterized in that a polarization-independent optical coupling device (PURK) which is downstream both of the first polarization converter (PK1) with respect to the direction of propagation (R1) of the polarized optical wave (Tln) guided in the first waveguide (WL) and of the second phase modulator (PM2) with respect to the direction of propagation (R2) of the optical wave (LO) guided in the second waveguide (WL2) is provided which is supplied with these two optical waves (Tln, TO) for heterodyning.

4. Arrangement according to Claim 3, characterized in that the coupling device (PURK) consists of an optical directional coupler.

5. Arrangement according to Claim 3 or 4, characterized in that the coupling device or the directional coupler (PURK) consists of a coupling device or a directional coupler having controllable coupling ratio.

6. Arrangement according to Claim 5 and one of Claims 3 to 4, characterized in that the coupling device or the directional coupler (PURK) are integrated on the substrate (1).

7. Arrangement according to Claim 4 and 6, characterized in that the two optical waveguides (WL1, WL2) integrated on the substrate (1) extend next to one another on the side of the first polarization converter (PK1) and of the second phase modulator (PM2) facing away from their inputs (e₁, e₂) - the output side of the arrangement - for a certain distance (S) with such narrow spacing that the two waveguides (WL1, WL2) form an optical directional coupler (PURK) within this distance.

8. Arrangement according to Claim 5 and 7, characterized in that at least three electrodes (E16, E17, E18) for applying control voltages are arranged on the substrate (1) within the certain distance (S), of which two electrodes (E16, E18) are arranged at both sides of the two waveguides (WL1, WL2) extending next to one another with narrow spacing and the third electrode (E17) is arranged between these two electrodes (E16, E18) above the intermediate space between these two waveguides (WL1, WL2).

9. Arrangement according to one of Claims 1 to 8, characterized in that the substrate (1) consists of a lithium niobate crystal cut in a certain direction perpendicular to its optical crystal axis, on which the two waveguides (WL1, WL2) are integrated in such a manner that their longitudinal direction in the area of the phase converters (PK1, PK2) and of the phase modulators (PM1; PM2, PM3), and thus also the directions of propagation (R1, R2) of the optical waves (Tln, LO) inserted into these waveguides (WL1, WL2) extend in the direction of the optical crystal axis (z axis) of this birefringent crystal in this area.

10. Arrangement for controlling polarization, particularly for an optical heterodyne or homodyne receiver, comprising
- an optical waveguide (WL) into which a polarized optical wave (Tln) received from a subscriber can be inserted, and with
- an arrangement of two or three phase modulators (PM) and two polarization converters (PK) which are arranged alternatingly along the waveguide (WL), wherein
- a continuously variable first birefringence with a refractive-index ellipsoid having an ellipsoid axis (A) with fixed alignment in a particular manner can be induced in the waveguide (WL) by each phase modulator (PM), as a result of which a phase of the optical wave (Tln) received from the subscriber, inserted into the waveguide (WL1) and guided in the waveguide (WL) can be continuously adjusted, and wherein
- a continuously variable second birefringence with a refractive-index ellipsoid having an ellipsoid axis (B) aligned at an angle of 45° with respect to the ellipsoid axis (A) of the first birefringence of the phase modulators (PM) can be induced in the waveguide (WL) by each polarization converter (PK) and a state of polarization which is orthogonal to a state of polarization of the optical wave (Tln) received from the subscriber and inserted into the waveguide (WL) can be generated,
characterized in that the waveguide (WL) is integrated on a substrate (1) of an electrooptical material, in that each phase modulator (PM) exhibits two electrodes (E11, E12), arranged on both sides of the waveguide (WL) on a substrate (1), for applying control voltages for inducing the respective first birefringence, and in that each polarization converter (PK) exhibits two electrodes (E13, E15) arranged on both sides of the waveguide (WL1) on the substrate (1) and a third electrode (E14) arranged above the waveguide (WL) between these two electrodes (E13, E15) on the substrate, for applying control voltages for inducing the respective second birefringence and setting the ellipsoid axis of this second birefringence to an angle of about 45° with respect to the ellipsoid axis (A) of the first birefringence.

11. Arrangement according to Claim 10, characterized in that the substrate (1) consists of a lithium niobate crystal cut in a particular direction perpendicular to the optical crystal axis.

## Revendications

1. Dispositif de contrôle de la polarisation, notamment pour un récepteur optique hétérodyne ou homodyne, comportant
- un premier guide d'ondes optiques (WL1) possédant une entrée (e₁) pour l'injection d'une onde optique polarisée (Tln) émise par un abonné,
- un premier modulateur de phase (PM1), au moyen duquel une première biréfringence modifiable continûment et possédant un ellipsoïde des indices de réfraction possédant un axe (A₁) orienté de façon fixe et d'une manière déterminée, peut être induite dans un premier guide d'ondes (WL1), et une phase de l'onde optique (Tln), injectée dans le premier guide d'ondes (WL1) et guidée dans ce premier guide d'ondes (WL1), est réglable continûment,
- un premier convertisseur de polarisation (PK1), qui est disposé en aval du premier modulateur de phase (PM1) dans la direction de propagation (R1) de l'onde optique (Tln) guidée dans le premier guide d'ondes (WL1) et au moyen duquel une seconde biréfringence commandable continûment et possédant un ellipsoïde des indices de réfraction possédant un axe (A₂) qui est orienté de manière à faire un angle d'environ 45° par rapport à l'axe (A₁) de l'ellipsoïde de la première biréfringence, peut être induite dans le premier guide d'ondes (WL1), et un état de polarisation de l'onde optique (Tln) guidée dans le premier guide d'ondes (WL1) peut être transformé en un état de polarisation quelconque, à une sortie du premier convertisseur de polarisation (PK1),
- un second guide d'ondes optiques (WL2) possédant une entrée (e₂) pour l'injection d'une onde optique polarisée (L0), émise par un oscillateur local et possédant un état de polarisation individuel,
- un second convertisseur de polarisation (PK2), à l'aide duquel une troisième biréfringence modifiable continûment et possédant un ellipsoïde des indices de réfraction comportant un axe (A₄) orienté suivant un angle d'environ 45° par rapport à l'axe (A₁) de l'ellipsoïde de la première biréfringence, peut être induite dans le second guide d'ondes (WL2), et une onde optique (L0), qui possède un état de polarisation orthogonal, est injectée dans le second guide d'ondes optiques (LW2) et est guidée dans ce dernier, peut être produite, et
- un second modulateur de phase (PM2) qui est branché en aval du second convertisseur de polarisation (PK2) dans la direction de propagation (R2) de l'onde optique (L0) guidée dans le second guide d'ondes (WL2) et au moyen duquel une quatrième biréfringence modifiable continûment et possédant un ellipsoïde des indices de réfraction possédant un axe (A₃) orienté parallèlement à l'axe (A₁) de l'ellipsoïde de la première biréfringence, peut être induite dans le second guide d'ondes (WL2), et l'état de polarisation de l'onde optique (L0) guidée dans le second guide d'ondes (WL2) peut être transformé en un état de polarisation quelconque à une sortie du second modulateur de phase (PM2),
caractérisé par le fait
- que les premier et second guides d'ondes optiques (WL1, WL2) sont intégrés sur un substrat (1) formé d'un matériau électro-optique,
- que chaque modulateur de phase (PM1; PM2, PM3) comporte un couple d'électrodes (E11,E12) qui sont disposées sur le substrat (1) des deux côtés du guide d'ondes (WL1; WL2) associé au modulateur de phase respectif (PM1, PM2), pour l'application de tensions de commande permettant d'induire la première ou la seconde biréfringence, et
- que chaque convertisseur de polarisation (PK1; PK2) comporte deux électrodes (E13, E15) qui sont disposées sur le substrat (1) des deux côtés du guide d'ondes (WL1; WL2) associé au convertisseur de polarisation respectif (PK1, PK2), et une troisième électrode (E14) disposée entre ces deux électrodes (E13, E15) au-dessus ce guide d'ondes (W1; W2), sur le substrat (1) et servant à appliquer des tensions de commande pour induire la troisième ou la quatrième biréfringence et régler l'axe (A₂, A₃) de l'ellipsoïde de cette troisième ou quatrième biréfringence sur un angle d'environ 45° par rapport à l'axe (A₁) de l'ellipsoïde de la première biréfringence.

2. Dispositif suivant la revendication 1, caractérisé par le fait qu'entre l'entrée (e₂) du second guide d'ondes (WL₂) et le second convertisseur de polarisation (PK2) est disposé un troisième modulateur de phase (PM3), au moyen duquel une cinquième biréfringence variable continûment et possédant un ellipsoïde des indices de réfraction ayant un axe (A₅) orienté parallèlement à l'axe (A₁) de l'ellipsoïde de la première biréfringence, peut être induite dans le second guide d'ondes (WL2), et n'importe quel état de polarisation de l'onde optique (L0) injectée dans le second guide d'ondes (WL2) peut être transformé en l'état de polarisation individuel, qui est nécessaire à une entrée du second convertisseur de polarisation (PK2).

3. Dispositif suivant la revendication 1 ou 2, caractérisé par le fait qu'il est prévu un dispositif de couplage optique (PURK) qui est indépendant de la polarisation, qui est disposé en aval aussi bien du premier convertisseur de polarisation (PK1) dans la direction de propagation (R1) de l'onde optique polarisée (Tln) guidée dans le premier guide d'ondes (WL1), que du second modulateur de phase (PM2) dans la direction de propagation (R2) de l'onde optique (L0) guidée dans le second guide d'ondes (WL2), et que ces deux ondes optiques (Tln, T0) sont envoyées pour leur superposition.

4. Dispositif suivant la revendication 3, caractérisé par le fait que le dispositif de couplage (PURK) est constitué par un coupleur optique directionnel.

5. Dispositif suivant la revendication 3 ou 4, caractérisé par le fait que le dispositif de couplage ou le coupleur directionnel (PURK) est constitué par un dispositif de couplage ou un coupleur directionnel possédant un rapport de couplage commandable.

6. Dispositif suivant la revendication 5 et l'une des revendications 3 et 4, caractérisé par le fait que le dispositif de couplage ou le coupleur directionnel (PURK) est intégré sur le substrat (1).

7. Dispositif suivant les revendications 4 et 6, caractérisé par le fait que les deux guides d'ondes optiques (WL1, WL2), qui sont intégrés sur le substrat (1), s'étendent côte-à-côte sur le côté, tourné à l'opposé de leurs entrées (e₁, e₂), du premier convertisseur de polarisation (PK) et du second modulateur de phase (PM2) - le côté de sortie du dispositif - le long d'une section déterminée (S), à une distance suffisamment faible pour que les deux guides d'ondes (WL1, WL2) forment, dans cette section, un coupleur optique directionnel (PURK).

8. Dispositif suivant les revendications 5 et 7, caractérisé par le fait qu'à l'intérieur de la section déterminée (S) sont disposées, sur le substrat (1), au moins trois électrodes (E16, E17, E18) qui servent à appliquer des tensions de commande et parmi lesquelles deux électrodes (E16, E18) sont disposées des deux côtés des deux guides d'ondes (WL1, WL2), qui s'étendent côte-à-côte à une faible distance, tandis que la troisième électrode (E17) est disposée entre ces deux électrodes (E16, E18) au-dessus de l'espace intercalaire présent entre ces deux guides d'ondes WL1, WL2.

9. Dispositif suivant l'une des revendications 1 à 8, caractérisé par le fait que le substrat (1) est réalisé en cristal de niobate de lithium qui est découpé dans une direction déterminée, perpendiculairement à son axe optique et sur lequel les deux guides d'ondes (WL1, WL2) sont intégrés de telle sorte que leur direction longitudinale dans la zone des convertisseurs de phase (PK1, PK2) et des modulateurs de phase (PM1, PM2, PM3), et, par conséquent, également la direction de propagation (R1, R2) des ondes optiques (Tln, L0), injectées dans ces guides d'ondes (WL1, WL2), s'étendent, dans cette zone, dans la direction de l'axe optique (axe z) de ce cristal biréfringent.

10. Dispositif de contrôle de polarisation, notamment pour un récepteur optique hétérodyne ou homodyne, comportant
- un guide d'ondes optiques (WL), dans lequel peut être injectée une onde optique polarisée (Tln), reçue par un abonné, et
- un dispositif formé de deux ou trois modulateurs de phase (PM) et de deux convertisseurs de polarisation (PK), qui sont disposés en alternance le long du guide d'ondes (WL),
- une première biréfringence variable continûment et possédant un ellipsoïde des indices de réfraction possédant un axe (A) orienté de façon et fixe d'une manière déterminée, peut être induite dans le guide d'ondes (WL), une phase de l'onde optique (Tln) reçue par l'abonné, injectée dans le guide d'ondes (WL1) et guidée dans le guide d'onde (WL), étant réglable continûment, et
- une seconde biréfringence, modifiable continûment et possédant un ellipsoïde des indices de réfraction comportant un axe (B) orienté sous un angle de 45° par rapport à l'axe (A) de l'ellipsoïde de la première biréfringence des modulateurs de phase (PM), pouvant être induite dans le guide d'ondes (WL) par chaque convertisseur de polarisation (PK), et un état de polarisation orthogonal à un état de polarisation de l'onde optique (Tln) reçue par l'abonné et injectée dans le guide d'ondes (WL), pouvant être produit,
caractérisé par le fait que le guide d'ondes (WL) est intégré sur un substrat (1) formé d'un matériau électro-optique, que chaque modulateur de phase (PM) comporte deux électrodes (E11, E12) disposées sur le substrat (1) des deux côtés du guide d'ondes (WL) et servant à apppliquer des tensions de commande pour induire la première biréfringence respective, et que chaque convertisseur de polarisation (PK) comporte deux électrodes (E13, E15), qui sont disposées sur le substrat (1) des deux côtés du guide d'ondes (WL1), et une troisième électrode (E14), qui est disposée sur le substrat entre ces deux électrodes (E13, E15) au-dessous du guide d'ondes (WL1) et sert à appliquer des tensions de commande pour induire la seconde biréfringence respective et régler l'axe de l'ellipsoïde de cette seconde biréfringence sur un angle d'environ 45° par rapport à un axe (A) de l'ellipsoïde de la première biréfringence.

11. Dispositif suivant la revendication 10, caractérisé par le fait que le substrat (1) est constitué par un cristal de niobate de lithium, qui est découpé dans une direction déterminée, perpendiculaire à l'axe optique du cristal.
